# EUROPÄISCHE PATENTSCHRIFT

(11) **EP 1 453 763 B1**
(45) Veröffentlichungstag und Bekanntmachung des Hinweises auf die Patenterteilung: **30.11.2005**
(21) Anmeldenummer: 02790670.0
(22) Anmeldetag: 10.12.2002
(51) Int. Cl.: C02F 11/12

(54) **VERFAHREN UND VORRICHTUNG ZUR TROCKNUNG VON SCHLAMM, INSBESONDERE VON ABWASSERSCHLAMM**
METHOD AND DEVICE FOR DRYING SLUDGE, PARTICULARLY SEWAGE SLUDGE
PROCEDE ET DISPOSITIF DE SECHAGE DE BOUES, EN PARTICULIER DE BOUES D'EAUX USEES

(30) Priorität: 13.12.2001 PL 11281801; 20.12.2001 PL 35129501; 22.05.2002 EP 02090176
(43) Veröffentlichungstag der Anmeldung: 08.09.2004
(73) Patentinhaber: Klimapol Sp.Z O.O.J.V., PL-21-002 Jastkow (PL)
(72) Erfinder: CYGIELSKI, Marek, PL-20-807 Lublin (PL); ZURAWSKI, Wlodzimierz, PL-20-601 Lublin (PL)
(74) Vertreter: Wenzel & Kalkoff
(86) Internationale Anmeldenummer: PCT/IB2002/005767
(87) Internationale Veröffentlichungsnummer: WO 2003/050046

(56) Entgegenhaltungen:
- DE-A- 4 401 623
- DE-C- 4 404 813
- GB-A- 2 053 715
- US-A- 5 899 003
- MELSA ARMIN ET AL: "Trocknung kommunaler Klaerschlaemme in DeutschlandTeil 1: Grundlagen der Trocknung und Darstellung der wesentlichen Verfahren" , KORRESPONDENZ ABWASSER, ABWASSERTECHNISCHE VEREINIGUNG, ST. AUGUSTIN, DE, VOL. 44, NR. 10, PAGE(S) 1869-1880 XP002186815 ISSN: 0341-1540 Seite 1877, Absatz 5.2.2 Abbildungen 3.1,5.4
- KELLER K: "Trocknung von Schlämmen in der Wirbelschicht" 7. KASSELER SIEDLUNGSWASSERWIRTSCHAFTLICHES SYMPOSIUM, THERMISCHE KLÄRSCHLAMMBEHANDLUNG - PLANUNG, TECHNOLOGIE UND ERFAHRUNGEN, Bd. 13, 1994, Seiten 178-187, XP008015081

## Beschreibung

Die Erfindung befaßt sich mit einem Verfahren zur Trocknung von Schlamm, insbesondere von Abwasserschlamm, umfassend die Schritte mechanische Entwässerung des Schlamms bis zu einem Feuchtigkeitsgehalt von etwa 65-90 %, Zuführen des Schlamms in einen Fluidisationstrockner, Formen des Schlamms, Trocknen mindestens der Oberfläche des geformten Schlamms im freien Fall in einem Gegenluftstrom aus Trockenluft, weiteres Trocknen des Schlamms in einem Trockenraum des Fluidisationstrockners mittels Trockenluft und Abführen des bis zu einem Feuchtigkeitsgehalt von etwa 15 bis 30 % getrockneten Schlamms einerseits und der Trockenluft andererseits aus dem Trokkenraum. Des weiteren befaßt sich die Erfindung mit einer Vorrichtung zum Trocknen von Schlamm, insbesondere Abwasserschlamm, im wesentlichen bestehend aus einem Fluidisationstrockner umfassend einen Trockenraum mit einer Eintrittsöffnung und einer Austrittsöffnung für den Schlamm, eine Eintrittsöffnung und eine Austrittsöffnung für Trockenluft, einen horizontal verlaufenden Siebboden, der den Trockenraum in eine Trockenkammer und eine Zuluftkammer teilt, sowie einen Schlammaufgeber mit einem Siebboden und eine Eintrittsöffnung für Trockenluft.

Die bekannten Verfahren bzw. Vorrichtungen werden bei der Trocknung von Schlämmen, insbesondere Abwasserschlämmen, Klärschlämmen und dergleichen eingesetzt (vgl. z.B. DE4401623). Derartige Schlämme sind üblicherweise sehr feucht und müssen zum Beispiel zur Weiterverarbeitung oder Deponierung getrocknet werden. Bisher wird die aus dem Fluidisationstrockner austretende Trockenluft, die durch Staub und andere Verunreinigungen kontaminiert ist und einen hohen Feuchtigkeitsgrad, bis hin zur Sättigung, aufweist, in einem komplexen und separaten Entstaubungs- und Entfeuchtungsverfahren nachbehandelt. Der aus dem Fluidisationstrockner austretende behandelte Schlamm, der immer noch eine Restfeuchtigkeit aufweist, wird durch weitere Energiezufuhr in einem separaten Verfahren ebenfalls nachbehandelt, um einen weiter erhöhten Trocknungszustand zu erzielen.

Die bekannten Verfahren bzw. Vorrichtungen zum Trocknen von Schlamm weisen jedoch insbesondere den Nachteil auf, daß der aus dem Fluidisationstrockner austretende Schlamm noch einen relativ hohen Feuchtigkeitsanteil von bis zu 30% aufweist. Das Nachtrocknen des Schlamms erfordert jedoch einen sehr hohen Energiebedarf, da die für die Nachtrocknung erforderliche Trockenluft erst durch Erwärmung von Frischluft vorbereitet werden muß. Des weiteren fallen bei der Nachbehandlung der kontaminierten Abluft aus dem Fluidisationstrockner große Mengen von belasteten Abwässern an, die speziell entsorgt werden müssen, wodurch die Betriebskosten weiter steigen. Ein weiterer Nachteil besteht darin, daß die bekannten Vorrichtungen sehr komplex sind und einen hohen Platzbedarf erfordern. Auch ist die Inbetriebnahme und Stillegung einerseits und die Wartung bekannter Vorrichtung anderseits aufwendig.

Es ist daher Aufgabe der vorliegenden Erfindung, ein Verfahren vorzuschlagen, das energiesparend arbeitet, bei gleichzeitig verbesserten Emissionswerten. Eine weitere Aufgabe der Erfindung besteht darin, eine Vorrichtung zu schaffen, mit der sowohl Betriebskosten als auch die Emissionen für die Umwelt reduziert werden können und die gleichzeitig eine kompakte und einfache Konstruktion aufweist.

Die der Erfindung zugrunde liegende Aufgabe wird zum einen mit einem Verfahren der eingangs genannten Art geschaffen, das dadurch gekennzeichnet ist, daß die Trockenluft in einem geschlossenen Kreislauf zirkuliert. Dadurch werden zum einen die Emissionen an für die Umwelt schädlichen Schadstoffen reduziert. Zum anderen wird auch der Energieverbrauch deutlich reduziert, da die bereits erwärmte Trockenluft erneut nutzbar gemacht wird. Mit dem erfindungsgemäßen Verfahren wird Schlamm mit einem niedrigen Feuchtigkeitsgehalt hergestellt, bei dem u.a. osmotisch gebundene Feuchtigkeit, die sich innerhalb der Zellen pflanzlichen und tierischen Gewebes bzw. innerhalb der Struktur kolloidaler Körper befindet, beseitigt. In diesen Körpern bilden Moleküle mit einer großen Molekülmasse halbdurchlässige Trennbereiche, zwischen denen sich die Feuchtigkeit meistens im Zustand einer Lösung von Verbindungen mit einer geringen Molekülmasse befindet. Auch die Beseitigung des Wassers, das durch chemische und koordinative Bindungen gebunden ist, wird erreicht.

In einer bevorzugten Weiterbildung des erfindungsgemäßen Verfahrens wird der aus einer Trockenkammer des Trockenraums abgeführte Schlamm einer Nachtrocknungsvorrichtung zugeführt und darin durch Beaufschlagen mit Trockenluft aus dem geschlossenen Kreislauf bis zu einem Feuchtigkeitsgehalt von etwa 1 bis 15% getrocknet. Dies führt zum einen dazu, daß das Endprodukt durch einen hohen Trockengrad und eine hohe Homogenität gekennzeichnet ist. Des weiteren führt die Nachtrocknung des Schlamms zu einem hohen Hygienisierungsgrad des Endproduktes, was die Weiterverarbeitung vereinfacht und eine landwirtschaftliche Nutzung ermöglicht. Der Vorteil des Nachtrocknens besteht auch darin, daß sich während der Nachtrocknung die Feuchtigkeit mit Hilfe der Molekulardiffusion oder der Kapillarkräfte nach außen schiebt.

Ein weiterer Vorteil wird dadurch erreicht, daß die Aufenthaltszeit des Schlamms in dem Trockenraum und/oder der Nachtrocknungsvorrichtung reguliert wird. Durch diese Regulierungsmöglichkeit ist ein individueller Einsatz in Abhängigkeit des gewünschten Endproduktes gewährleistet, wobei sichergestellt ist, daß der Schlamm nur solange der Trocknung ausgesetzt ist, wie es unbedingt notwendig ist. Dadurch können die Betriebskosten weiter gesenkt werden.

Vorteilhafterweise wird die durch das Entfeuchten der Trockenluft in Transportrichtung hinter dem Fluidisationstrockner gewonnene Kondensationswärrnemenge zur Erwärmung der Trockenluft vor dem Fluidisationstrockner verwendet. Dadurch wird die ohnehin im System befindliche Primärenergie noch besser genutzt, was zu einer weiteren Reduzierung der Betriebskosten führt.

Des weiteren wird die Aufgabe der Erfindung durch eine Vorrichtung mit den eingangs genannten Merkmalen dadurch gelöst, daß die Vorrichtung als geschlossenes System ausgebildet ist, derart, daß die aus der Trockenkammer abgeführte Trockenluft dem Trockenraum wieder zugeführt wird. Die aus der Trockenkammer abgeführte Trockenluft wird quasi recycelt und innerhalb des Systems belassen, so daß ein höherer Wirkungsgrad der Anlage insgesamt erzielt wird. Dadurch sinken die Energiekosten und die Betriebsausgaben insgesamt. Auch werden die Emissionen an die Umwelt reduziert.

Eine besonders bevorzugte Ausführungsform der Erfindung weist zusätzlich zum Fluidisationstrockner eine Vorrichtung zum Nachtrocknen auf, die dem Fluidisationstrockner nachgeordnet ist. Dadurch wird eine noch bessere Trocknung des Schlamms erreicht. Besonders vorteilhaft ist es, daß die Vorrichtung zum Nachtrocknen innerhalb der Zuluftkammer ausgebildet ist. Dadurch ist eine besonders kompakte und einfache Konstruktion ermöglicht, was auch eine schnelle und einfache In- und Außerbetriebnahme sowie Wartung nach sich zieht.

Vorteilhafterweise ist innerhalb der Trockenkammer mindestens ein Rührwerk angeordnet, wodurch ein schneller Energieaustausch und der Wasseraustritt aus dem Schlamm begünstigt wird.

Gemäß der Erfindung ist der Schlammaufgeber als Dosiereinheit ausgebildet und aus einem Gehäuse mit einer Pumpe, einem Formsieb als Siebboden und einem Drehmesser, das an das Formsieb drückbar ist, gebildet. Mittels des Formsiebs wird der zugeführte Schlamm zu fadenartigen Elementen umgeformt und mittels der Drehmesser durch das Formsieb gepreßt. Durch das Andrücken des Drehmessers an das Formsieb einerseits und die Rotation des Drehmessers andererseits wird sichergestellt, daß der Schlamm vollständig und sicher durch das Formsieb gepreßt wird. Man spricht daher auch von einer Reinigungseinheit. Durch die verwendete Lösung werden Verstopfungen durch faserige und feste Stoffe vermieden, was gleichzeitig zu einer niedrigeren Ausfallwahrscheinlichkeit führt.

Eine bevorzugte Ausführungsform der Erfindung weist eine Wärmepumpenanlage im Bereich des Leitungssystems auf, mittels der der Einsatz von Primärenergie für die gesamte Vorrichtung zum Trocknen von Schlamm optimiert werden kann.

Weitere Vorteile und Ausführungsformen der Erfindung ergeben sich aus den Unteransprüchen sowie den Zeichnungen. Besonders bevorzugte Verfahrensschritte sowie Ausführungsformen der erfindungsgemäßen Vorrichtungen werden anhand der Zeichnung näher erläutert. In der Zeichnung zeigen:
- Fig. 1: einen Fluidisationstrockner im Längsschnitt gemäß einer ersten Ausshrungsform der vorliegenden Erfindung,

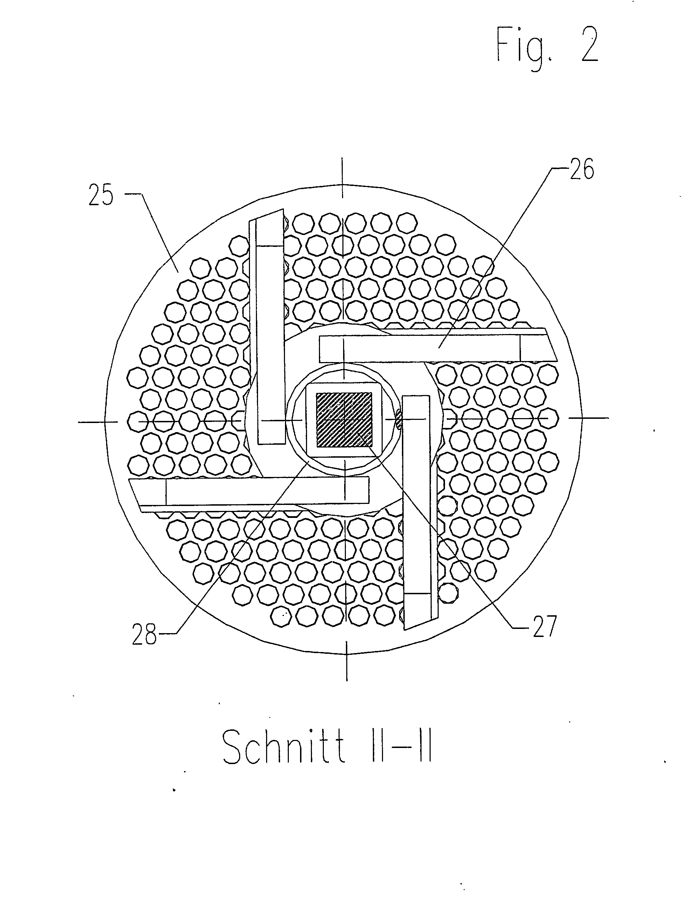

- Fig. 2: eine Ansicht gemäß Schnitt II-II aus der Fig. 1,
- Fig. 3: einen Fluidisationstrockner im Längsschnitt gemäß einer zweiten Ausführungsform der vorliegenden Erfindung,
- Fig. 4: eine schematische Darstellung einer Vorrichtung zum Trocknen von Schlamm mit einem Fluidisationstrockner gemäß Fig.1,
- Fig. 5: eine schematische Darstellung einer Vorrichtung zum Trocknen von Schlamm mit einem Fluidisationstrockner gemäß Fig. 3, und
- Fig. 6: eine schematische Darstellung einer weiteren Vorrichtung zum Trocknen von Schlamm mit einem Fluidisationstrockner gemäß Fig. 3.

Im folgenden werden verschiedene Ausführungsformen von Vorrichtungen zum Trocknen von Schlamm, insbesondere von Abwasserschlämmen, beschrieben. Des weiteren werden Verfahren zum Schlammtrocknen beschrieben.

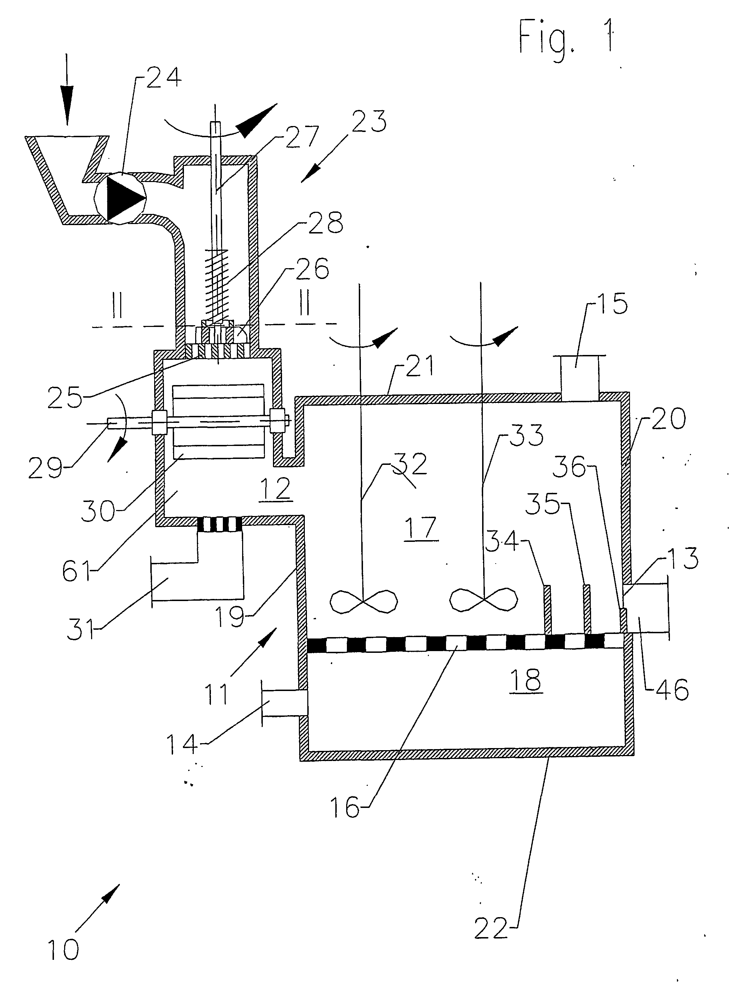

In Fig. 1 ist ein Fluidisationstrockner 10 als wesentlicher Teil einer Vorrichtung zum Trocknen von Schlamm gezeigt. Der Fluidisationstrockner 10 umfaßt einen Trockenraum 11. Der Trockenraum 11 weist eine Eintrittsöffnung 12 sowie eine Austrittsöffnung 13 für den zu trocknenden Schlamm auf. Des weiteren verfügt der Trockenraum 11 über eine Eintrittsöffnung 14 und eine Austrittsöffnung 15 für die Trockenluft. Der Trockenraum 11 selbst ist durch ein Sieb, nämlich das sogenannte Fluidisationssieb 16, in eine Trockenkammer 17 und Zuluftkammer 18 unterteilt. Das Fluidisationssieb 16 verläuft im wesentlichen horizontal, nämlich senkrecht zu Seitwänden 19, 20 des Trockenraumes 11. Nach oben bzw. nach unten ist die Trockenkammer durch eine Deckenwand 21 sowie eine Bodenwand 22 abgeschlossen. Die Eintrittsöffnung 12 für den zu trocknenden Schlamm sowie die Austrittsöffnungen 13, 15 für den Schlamm bzw. die Trockenluft führen in die Trockenkammer 17 bzw. aus dieser heraus. Die Eintrittsöffnung 14 für die Trockenluft führt in die Zuluftkammer 18.

Im Bereich der Eintrittsöffnung 12 für den Schlamm ist der sogenannte Schlammaufgeber angeordnet, der im gezeigten Ausführungsbeispiel als Dosiereinheit 23 ausgebildet ist. Die Dosiereinheit 23 besteht im wesentlichen aus einer Pumpe 24, die beispielsweise als Schneckenpumpe ausgebildet sein kann, einem Formsieb 25, das als Siebboden dient, sowie einem Drehmesser 26. Das Drehmesser 26 liegt lose auf einer Antriebswelle 27 und ist mittels einer Feder 28 oder dergleichen gegen das Formsieb 25 drückbar. Der durch die Feder 28 aufgebrachte Druck auf das Drehmesser 26 kann auch durch andere übliche Mittel, wie zum Beispiel Hydraulik- oder Pneumatikzylinder, aufgebracht werden.

Unterhalb des Formsiebs 25, also in Flußrichtung des Schlammes hinter dem Formsieb 25 und vor der Eintrittsöffnung 12 für den Schlamm in die Trockenkammer 17 ist eine Welle 29 mit montierten Messern 30 gelagert. Das drehbar antreibbare Messer 30 ist oberhalb einer Eintrittsöffnung 31 für Trockenluft angeordnet. Innerhalb der Trockenkammer 17 sind im gezeigten Ausführungsbeispiel zwei Rührwerke 32, 33 angeordnet, die in Transportrichtung des Schlamms vor vertikalen Trennwänden 34, 35 angeordnet sind. Die Trennwände 34, 35 sind senkrecht zum Fluidisationssieb 16 angeordnet. Das Längenmaß der Trennwände 34, 35 beträgt mehr als die Hälfte des Breitenmaßes der Trockenkammer 17. Im Bereich der Austrittsöffnung 13 für den Schlamm aus der Trockenkammer 17 ist eine Schwelle 36 vorgesehen, deren Höhe einstellbar ist.

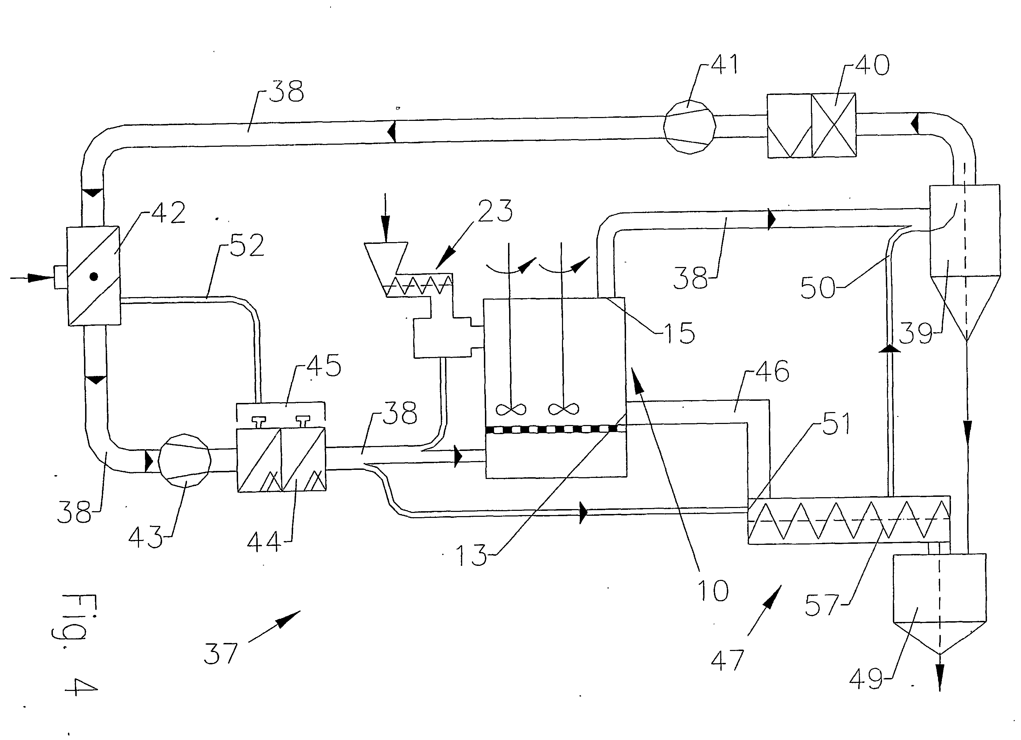

Der Fluidisationstrockner 10 ist wesentlicher Bestandteil der Vorrichtung 37 zum Trocknen von Schlamm gemäß Fig. 4. Unmittelbar an die Austrittsöffnung 15 für die Trockenluft aus der Trockenkammer ist ein Leitungssystem 38 angeordnet, das zur Rückführung der Trockenluft dient. Durch das Leitungssystem 38 ist die Vorrichtung 37 als geschlossenes System ausgebildet. Ausgehend von dem Fluidisationstrockner 10 befinden sich in Flußrichtung der Trockenluft Mittel 39 zum Entstauben, Mittel 40 zum Entfeuchten, ein Ventilator 41 für Abluft, eine Jalousettenregelung 42, ein Ventilator 43 für Zuluft sowie ein Wärmelufterzeuger 44. Im Bereich des Wärinelufterzeugers 44 ist eine Brennkammer 45 vorgesehen.

Unmittelbar an die Austrittsöffnung 13 für den Schlamm aus der Trockenkammer 17 schließt sich eine Leitung 46 zur Verbindung der Trockenkammer 17 mit einer Vorrichtung 47 zum Nachtrocknen des Schlamms an. Innerhalb der Vorrichtung 47 ist eine Schnecke 48 oder dergleichen zum Transport des Schlamms durch die Vorrichtung 47 angeordnet. Die rotierend antreibbare Schnecke 48 ist in ihrer Drehgeschwindigkeit variabel einstellbar. In Transportrichtung am Ende der Vorrichtung 47 ist eine Austrittsöffnung für den Schlamm angeordnet, der in einen Behälter 49 geleitet werden kann. Der Behälter 49 dient ebenfalls zur Aufnahme des aus der Trockenluft gefilterten Staubs durch das Mittel 39 zum Entstauben der Trockenluft. Die aus der Vorrichtung 47 abzuführende Trockenluft wird mittels einer Leitung 50 wiederum dem Leitungssystem 38 zugeführt. Eingangsseitig weist die Vorrichtung 47 eine Eintrittsöffnung 51 für Trockenluft auf. Die der Vorrichtung 47 zugeführte Trockenluft wird durch das Leitungssystem 38 an die Vorrichtung 47 geführt. Hierzu teilt sich das Leitungssystem 38 in Transportrichtung hinter dem Wärmelufterzeuger 44 auf. Ein Teil des Trockenluftstromes wird zur Vorrichtung 47 geleitet. Der Hauptteil der Trockenluft wird zur Luftkammer des Fluidisationstrockners 10 geleitet. Ein dritter Teil der Trockenluft wird der Dosiereinheit 23 zugeführt. Eine weitere Leitung 52 erstreckt sich von der Jalousettenregelung 42 zur Brennkammer 45 des Wärmelufterzeugers 44.

Das Mittel 39 zum Entstauben der aus der Trockenkammer 17 abgeführten Trockenluft enthält Entstaubungsmodule, mittels derer ein sehr hoher Entstaubungsgrad der Trockenluft ohne Reduzierung des Feuchtigkeitsgehaltes erreicht wird. Das Mittel 40 zum Entfeuchten der bereits vom Staub gereinigten Trockenluft enthält einen Wärmetauscher. Zum Abführen des Brüdenkondensats aus dem Wärmetauscher existiert ein nicht dargestellter Kondensatablaufstutzen. In der gezeigten Ausführungsform ist der Wärmelufterzeuger 44 als Membran-Wärmelufterzeuger ausgebildet.

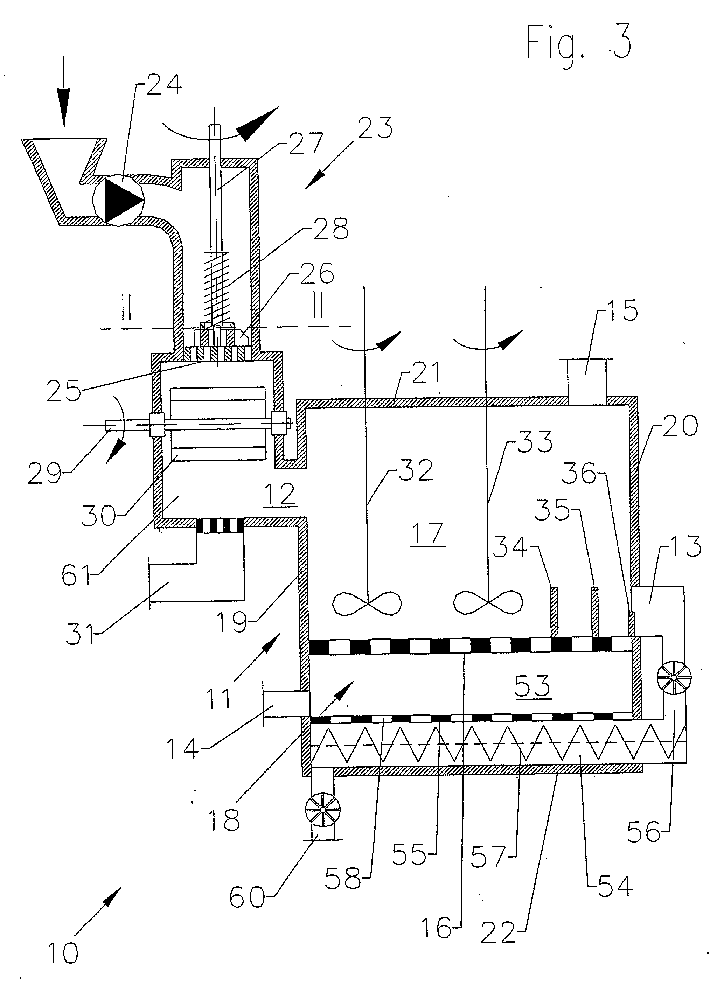

Die Ausführungsform des Fluidisationstrockners 10 gemäß Fig. 3 entspricht in wesentlichen Teilen der Ausführungsform gemäß Fig. 1, so daß für gleiche Teile die gleichen Bezugszeichen verwendet werden. Allerdings unterscheidet sich der Fluidisationstrockner 10 gemäß Fig. 3 gegenüber dem aus Fig. 1 darin, daß die Zuluftkammer 18 wiederum in eine obere Kammer 53 und eine untere Kammer 54 unterteilt ist. Die beiden Kammern 53 und 54 sind durch einen Siebboden 55 voneinander getrennt. Die Eintrittsöffnung 14 für die Trockenluft ist im Bereich der oberen Kammer 53 in der Seitenwand 19 ausgebildet. Innerhalb der unteren Kammer 54 ist ein Transportmittel für den aus der Trockenkammer 17 über ein Leitungssystem 56 in die untere Kammer geleiteten Schlamm vorgesehen. Das Transportmittel ist im gezeigten Ausführungsbeispiel als Schneckenförderer 57 ausgebildet. Der Schneckenförderer 57 ist drehbar und hinsichtlich der Rotationsgeschwindigkeit einstellbar. Der Siebboden 55 weist Öffnungen 58 auf, die in einem Bereich nahe der Eintrittsöffnung 14 (nicht dargestellte) Strömungsklappen aufweisen, die sich in Richtung der Eintrittsöffnung 14 öffnen und in einem in Flußrichtung hinteren Bereich der Trockenluft (nicht dargestellte) Bleche aufweisen, deren Öffnung von der Eintrittsöffnung 14 abgewandt sind.

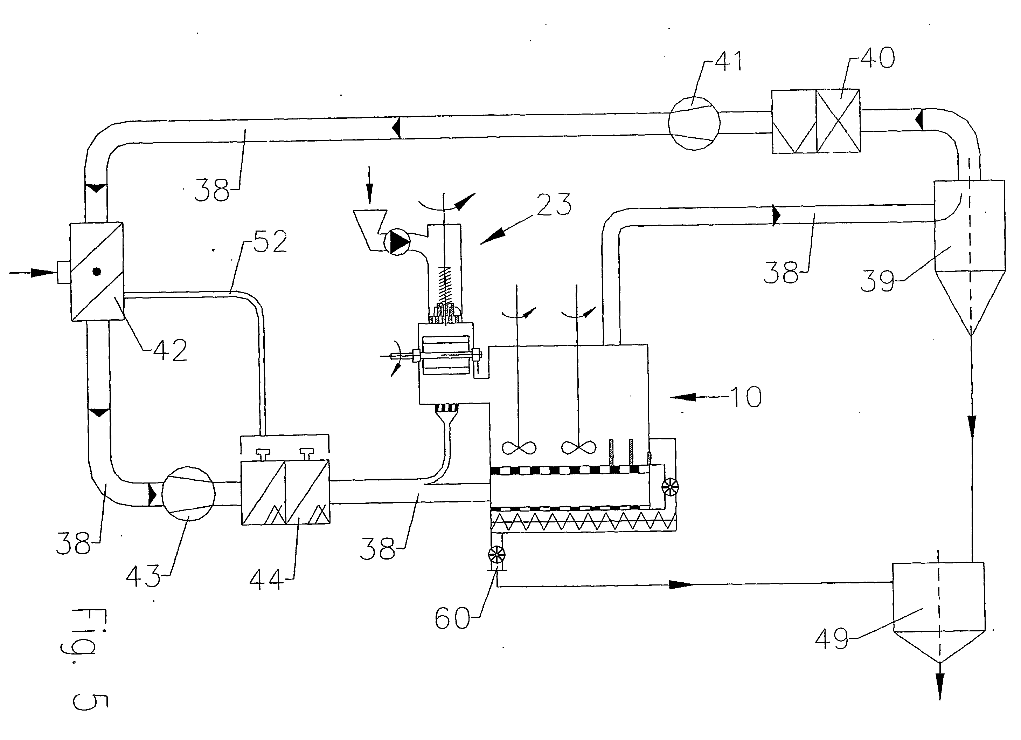

Der Fluidisationstrockner 10 gemäß der Fig. 3 ist wesentlicher Bestandteil der Vorrichtung 59 gemäß Fig. 5. Die Vorrichtung 59 gemäß Fig. 5 ist im wesentlichen identisch zur Vorrichtung 37 gemäß Fig. 4, allerdings mit dem Unterschied, daß der aus der Trokkenkammer geführte Schlamm über die Leitung 56 in die untere Kammer 53 der Zuluftkammer 18 geleitet wird. Der nachgetrocknete Schlamm wird dann über eine Leitung 60 in den Behälter 49 geleitet. Ein weiterer Unterschied besteht darin, daß das Leitungssystem 38 in Flußrichtung hinter dem Wärmelufterzeuger 44 lediglich zweigeteilt ist, nämlich mit einer Hauptleitung zur oberen Kammer 53 der Zuluftkammer 18 und einer weiteren Zuleitung zur Dosiereinheit 23.

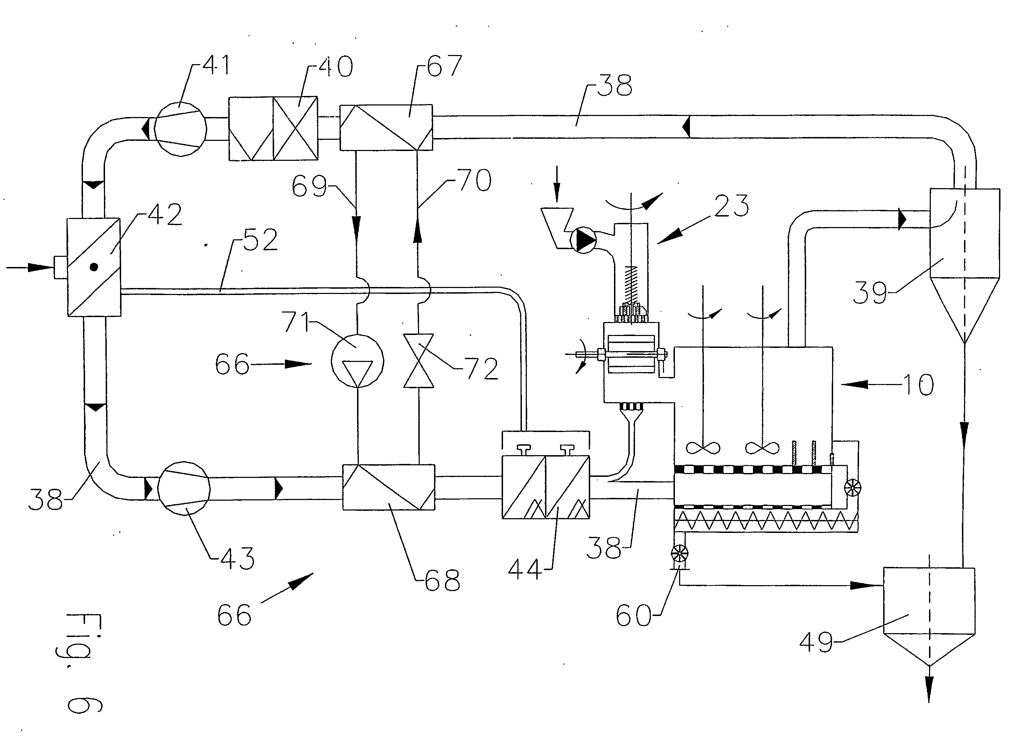

Aus der Figur 6 geht eine Vorrichtung 65 hervor, die im wesentlichen der Vorrichtung 59 gemäß Figur 5 entspricht, so daß für gleiche Teile die entsprechenden Bezugsziffern vergeben sind und auf eine Beschreibung verzichtet wird. Zusätzlich weist die Vorrichtung 65 jedoch eine Wärmepumpenanlage 66 auf. Die Wärmepumpenanlage 66 besteht zweckmäßigerweise aus zwei Wärmetauschern, wobei ein Wärmetauscher als Verdampfer 67 und der andere Wärmetauscher als Kondensator 68 ausgebildet ist. Der Verdampfer 67 und der Kondensator 68 sind über Leitungen 69, 70 miteinander verbunden, wobei in der Leitung 69, die vom Verdampfer 67 zum Kondenstaor 68 führt, eine Pumpe 71 zum Transport eines Kältemittels vorgesehen ist. Die Flußrichtung des Kältemittels ist in der Figur 6 durch Pfeile angedeutet. In der Leitung 70, die vom Kondensator 68 zum Verdampfer 67 führt, ist ein Ventil 72 angeordnet. Als Kältemittel, das als Wärmeträger dient, ist Wasser/Dampf vorgesehen. Es sind jedoch auch andere übliche Kältemittel einsetzbar. Der Verdampfer 67 ist im Abluftstrom aus dem Fluidisationstrockner 10 im Bereich des Leitungssystems 38 in Transportrichtung des Abluftstroms zwischen dem Mittel 39 zum Entstauben und dem Mittel 40 zum Entfeuchten angeordnet. Der Kondensator 68 ist im Bereich des Leitungssystems 38 zwischen dem Ventilator 43 für die Zuluft und dem Wärmelufterzeuger 44 vorgesehen. Die Wärmepumpenanlage 66 kann selbstverständlich auch Bestandteil der Vorrichtung 37 gemäß Figur 4 sein.

Im folgenden wird das Verfahren gemäß der vorliegenden Erfindung im Detail beschrieben:
Der mechanisch bis zu einem Feuchtigkeitsgehalt von 65-90 % entwässerte Schlamm wird mit der Schneckenpumpe 24 zur Dosiereinheit 23, die auch als Fluidisierungs-Dosiereinrichtung bezeichnet wird, gefördert. Der Schlamm fällt auf das Formsieb 25 und wird durch das rotierende Drehmesser 26 gleichmäßig durch die Öffnungen des Formsiebes 25 gepreßt. Dabei wird das vorwiegend pastenförmige Material zu fadenartigen längeren elastischen Fragmenten umgeformt. Diese fadenartigen Fragmente werden auch als "Nudeln" bezeichnet. Durch die Rotation des Drehmessers 26 wird sichergestellt, daß der Bereich des Formsiebes 25 permanent gereinigt wird, so daß Verstopfungen, insbesondere durch faserige und feste Stoffe, vermieden werden. Die fadenartigen Fragmente des Schlamms gelangen im freien Fall in eine untere Kammer 61 der Dosiereinheit 23. Dieser unteren Kammer 61 wird über die Eintrittsöffnung 31 durch den Wärmeerzeuger 44 erwärmte Luft zugeführt, wobei die Luftströmung eine gleichmäßige flächige Trocknung, insbesondere der Oberfläche des geformten Schlamms bewirkt. Die Temperatur der Luft beträgt vorzugsweise 130 bis 150°C. Mit der Vortrocknung wird eine wiederholte Aggregation des geformten Schlamms verhindert. Mit anderen Worten wird die sogenannte Leimphase des Schlamms vermieden.

Die fadenartigen Schlammfragmente fallen auf die rotierenden Messer 30, wodurch die Zerkleinerung der Schlammfragmente erfolgt. Danach gelangt der geformte und zerkleinerte Schlamm durch die Eintrittsöffnung 12 in der Seitenwand 19 des Trockenraumes 11 in die Trockenkammer 17. Der geformte und zerkleinerte Schlamm fällt in Richtung des Fluidisationssiebes 16 und wird bei geringem Unterdruck getrocknet. Durch die Luftzufuhr von Trockenluft aus der Zuluftkammer 18 findet jedoch eine Verwirbelung des Schlamms statt. Man spricht in diesem Zusammenhang auch von Fluidisierung des Schlammes, da die Schlammfragmente sich quasi wie flüssiges Material verhalten und über dem Fluidisationssieb 16 schweben. Die zugeführte Trockenluft weist eine Temperatur von etwa 130-150° Celsius auf. Der aus der Zuluftkammer 18 in die Trockenkammer 17 strömende Luftstrom entspannt sich, während er nach oben strömt und weist eine Geschwindigkeit auf, die auf der Höhe des Fluidisationssiebes 16 zwei- bis viermal höher ist als die Geschwindigkeit des Hochschweben des Schlammes. Mittels des der Trockenkammer 17 zugeführten Luftstroms wird zum einen erreicht, daß Energie zugeführt wird, damit die für die Wasserverdampfung aus dem Schlamm notwendige Wärmeenergie vorhanden ist. Des weiteren dient der Luftstrom als Träger für kinetische Energie, womit die für die Fluidisierung des Schlammes notwendige Energie zugeführt wird. Letztlich dient der Luftstrom auch als Träger des verdampften Wassers, und zwar zum Austrag des Wasserdampfes aus der Trockenkammer 17 durch die Austrittsöffnung 15. Die Schlammtrocknung erfolgt durch Einwirkung der hohen Temperatur der Trokkenluft. Durch die intensive Vermischung und hohe Luftgeschwindigkeit werden der schnelle Energieaustausch und der Wasseraustritt begünstigt. Die Wirbelschicht verhält sich wie eine Siedeflüssigkeit, die zum Spiegelausgleich tendiert.

Um die Fluidisierung des bereits vorgetrockneten Schlammes im Eintrittsteil der Trokkenkammer 17 zu gewährleisten, dienen die Rührwerke 32, 33, die für eine permanente gleichmäßige Verwirbelung des Schlammes dienen. Innerhalb der Trockenkammer 17 wird der den Rührwerken 32, 33 und der Trockenluft aus der Zuluftkammer 18 ausgesetzte Schlamm mäanderförmig über die Oberfläche des Fluidisationssiebes 16 geführt. Hierzu dienen die Trennwände 34, 35, die den Weg, den der Schlamm in Richtung der Austrittsöffnung 13 zurücklegen muß, künstlich verlängern. Der zerkleinerte Schlamm wird selbsttätig in die Austragungsrichtung zur Austrittsöffnung 13 transportiert. Danach wird der Schlammüberschuß aus der Austrittsöffnung 13 ausgetragen, wobei der Schlamm eine Temperatur von etwa 60 bis 80°C aufweist. Beim Austrag des Schlamms aus der Trockenkammer 17 wird die variable Schwelle 36 verwendet, um die Höhe der Schlammschicht in der Trockenkammer 17 und damit die Aufenthaltszeit sowie den Trockengrad regulieren zu können. Üblicherweise wird die Höhe der Schlammschicht auf ein Niveau von etwa 30-150 mm über der Oberfläche des Fluidisationssiebes 16 eingestellt. Es sind jedoch auch andere Höhen vorstellbar, um die Aufenthaltszeit des Schlamms in der Trockenkammer 17 zu regulieren.

Bei dem Verfahren in der Anlage gemäß Fig. 4 wird der Schlamm nach dem Austrag aus der Trockenkammer 17 über die Leitung 46 der Vorrichtung 47 zum Nachtrocknen des Schlamms zugeführt. In der Vorrichtung 47 wird der Schlamm bei erhöhter Temperatur durch Trockenluft mit einer Temperatur von vorzugsweise etwa 130 bis 150 °C, die direkt aus dem Wärmelufterzeuger 44 zugeführt wird, zurückgehalten und getrocknet, um die Migration der restlichen Feuchtigkeit aus dem granulierten Schlamm zu ermöglichen. Um diese Migration zu erleichtern, weist die Vorrichtung 47 die Schnecke 48 auf, um die Schlammvermischung und die Luftströmung zwecks Schwadenentfernung zu ermöglichen. Der Vorteil des System besteht darin, daß durch die kontinuierliche Mischung die Feuchtigkeit mittels Teilchendiffusion und/oder Kapillarkräften hinaustransportiert wird. Die Aufenthaltszeit in der Vorrichtung 47 läßt sich durch die Rotationsgeschwindigkeit der Schnecke 48 beeinflussen. Eine Einstellung der Aufenthaltszeit ist auch insbesondere deswegen wünschenswert, um die Entfernung der osmotisch gebundenen und in pflanzlichen und tierischen Zellen bzw. in Kolloiden enthaltene Feuchtigkeit zu gewährleisten. Zum weiteren wird durch das Nachtrocknen auch erreicht, das durch chemische Bindungen oder Koordinationsbindungen verbundene Wasser aus dem Schlamm zu entfernen. Durch das mehrstufige Trocknen des Schlamms wird im Endergebnis Schlamm mit einem Feuchtigkeitsgehalt von etwa 1-15 % erzielt. Des weiteren ist durch die lange Verweildauer des Schlamms bei erhöhten Temperaturen das Endprodukt hygienisch. Der getrocknete Schlamm wird durch einen mittels Zellenschleuse abgedichteten Schlammaustrittsstutzen (nicht dargestellt) in den Behälter 49 transportiert. Die Trockenluftströmung aus der Vorrichtung 47 wird in das Leitungssystem 38 zurückgeführt.

Die aus der Trockenkammer 17 abgeführte Trockenluft, die eine Temperatur von etwa 60-90° Celsius aufweist, durch das Leitungssystem 38 dem Mittel 39 zur Entstaubung zugeführt und dort entstaubt, allerdings ohne der Abluft Feuchtigkeit zu entziehen. Die aus der Trockenkammer 17 entweichende Trockenluft ist mit Feuchtigkeit gesättigt und mit Staub und Aerosolen kontaminiert. Nach der Entstaubung der Trockenluft wird der abgetrennte Staub ausgetragen, und zwar in den Behälter 49. Die entstaubte aber noch feuchte Trockenluft wird über das Leitungssystem 38 dem Mittel 40 zum Entfeuchten zugeführt. In dem Mittel 40 wird die Lufttemperatur auf etwa 40-70° Celsius herabgekühlt und dadurch Dampfkondensation erreicht. Die Prozeßtemperaturen sind entsprechend angepaßt, um die erheblichen Änderungen des Dampfgehaltes in der Luft bei kleinen Änderungen der Temperatur zu garantieren. Daher ist die Kondensation von großen Wassermengen durch kleine Temperaturreduzierungen möglich. Das Brühenkondensat aus dem Wärmetauscher wird nach außen abgeführt. Die Brühen werden dabei im Mittel 40, das als Wärmetauscher oder auch Kühler ausgebildet ist, ohne direkten Kontakt zum Kühlmittel kondensiert. Die Kontaminierung des resultierenden Kondensates ist wegen der verwendeten Lösung und des effektiven Entstaubungssystems sehr niedrig.

Die entstaubte und entfeuchtete Trockenluft, die in Flußrichtung der Trockenluft hinter dem Mittel 40 zur Entfeuchtung eine Temperatur von etwa 40-70° Celsius aufweist, wird über das Leitungssystem 38 der Jalousettenregelung 42 zugeführt. Ein minimaler Anteil der gekühlten und entstaubten Trockenluft bis zu einer Menge von maximal 5 % wird zeitweise direkt in die Brennkammer 45 des Wärmelufterzeugers 44 geleitet und dort verbrannt. Dadurch wird die Unschädlichmachung von gasförmigen organischen Verunreinigungen gewährleistet. Der minimale Anteil der an die Brennkammer 45 abzugebenden Luft wird durch Frischluft ergänzt. Danach wird die Trockenluft durch die Ventilation mittels des Ventilators 43 dem Wärmelufterzeuger 44 zugeführt. Durch Verwendung des Ventilators 43 wird ein geringer Unterdruck aufgebaut, der die Sicherheit und Bedienungshygiene innerhalb des Fluidisationstrockners 10 gewährleistet. Der Wärmelufterzeuger 44 wird die Trockenluft wieder auf die erforderliche Temperatur von etwa 130-150° Celsius erhöhen. Um das Schließen des Trockenluftkreislaufes zu ermöglichen, ist die Verwendung des Membran-Wärmelufterzeugers notwendig, um die Rauchgasströmung und Trockenluftströmung zu trennen.

Das Verfahren mit der Vorrichtung 59 gemäß Fig. 5 verläuft in sehr ähnlicher Weise. Allerdings wird der Schlamm nach Austritt aus der Trockenkammer 17 direkt der unteren Kammer 54 der Zuluftkammer 18 zugeführt und dort einer Nachtrocknung unterzogen. Mittels der Schnecke wird der Schlamm durch die Vorrichtung 47 gefördert, wobei die Transportgeschwindigkeit über die Schnecke reguliert werden kann. Die Trockenluft zur Trocknung wird durch das Leitungssystem 38 der Zuluftkammer 18 zugeführt, wobei die Trockenluft durch den Siebboden 55 in die untere Kammer 54 gelangt. Der getrocknete Schlamm wird dem Behälter 49 über die Leitung 60 zugeführt. Die Abluft entweicht durch den Siebboden 55 über die Trockenkammer 17 in das Leitungssystem 38.

Das Verfahren mit der Vorrichtung 65 gemäß der Figur 6 läuft im wesentlichen ab wie das Verfahren mit der Vorrichtung 59 gemäß Figur 5. Allerdings wird bei der Vorrichtung 65 die Trockenluft, die den Fluidisationstrockner 10 und/oder die Vorrichtung 47 zum Nachtrocknen verläßt und durch das Mittel 39 entstaubt wird, nach dem Enstauben durch den Verdampfer 67 geleitet. Dadurch wird die Trockenluft bzw. die Abluft in einem ersten Schritt mindestens teilweise entfeuchtet, wobei die durch die Entfeuchtung entzogene Kondensationswärmeinenge vor dem Wärmeerzeuger 44 über den Kondensator 68 in das Leitungssystem 38 eingespeist wird bzw. zur Erwärmung der Luft innerhalb der Leitung 38 vor dem Wärmeerzeuger 44 dient. Dadurch wird die Luft, die dem Wärmeerzeuger 44 zugeführt wird, bereits vorgewärmt und auf ein erhöhtes Temperaturniveau gebracht, so daß die erforderliche Energiezufuhr zum Wärmeerzeuger 44 reduziert werden kann. Das Kühlmittel zirkuliert in den Leitungen 69,70 und wird durch die Pumpe 71 angetrieben. Mit dem Ventil 72 läßt sich der Kühlmittelstrom regeln bzw. steuern. Zusätzlich wird die Abluft nach dem Verdampfer 67 dann in einem weiteren Schritt noch weiter durch das Mittel 40 entfeuchtet. Durch die mindestens teilweise Entfeuchtung der Trockenluft durch den Verdampfer 67 kann die Leistung des Mittels 40 reduziert werden.

## Patentansprüche

1. Verfahren zur Trocknung von Schlamm, insbesondere von Abwasserschlamm, umfassend die Schritte:
a) mechanische Entwässerung des Schlamms bis zu einem Feuchtigkeitsgehalt von etwa 90 bis 65%,
b) Zuführen des Schlamms in einen Fluidisationstrockner (10),
c) Trocknen des Schlamms in einem Trockenraum (11) des Fluidisationstrockners (10) mittels Trockenluft,
d) Abführen des bis zu einem Feuchtigkeitsgehalt von etwa 30 bis 15% getrockneten Schlamms einerseits und der nunmehr feuchten und staubhaltigen Trockenluft andererseits aus dem Trockenraum,
e) wobei die aus dem Trockenraum (11) abgeführte Trockenluft entstaubt, entfeuchtet und anschließend nach einer Erwärmung in einem geschlossenen Kreislauf wieder dem Trockenraum (11) zugeführt wird,
**dadurch gekennzeichnet, daß**
f) der Schlamm vor dem Eintritt in den Trockenraum (11) geformt,
g) der geformte Schlamm im freien Fall in einem Gegenluftstrom aus Trockenluft mindestens oberflächlich getrocknet,
h) zerkleinert, und
i) dann dem Trockenraum zugeführt wird.

2. Verfahren nach Anspruch 1, **dadurch gekennzeichnet, daß** der Schlamm während der Trocknung in einer Trockenkammer (17) des Trockenraums (11) in Schwebe gehalten wird.

3. Verfahren nach Anspruch 1 oder 2, **dadurch gekennzeichnet, daß** die Geschwindigkeit der Trockenluft auf der Höhe eines Siebbodens (16) innerhalb des Trockenraumes (11) etwa 2 bis 4 mal größer ist als die Schwebegeschwindigkeit des Schlamms.

4. Verfahren nach einem der Ansprüche 1 bis 3, **dadurch gekennzeichnet, daß** die durch das Entfeuchten der Trockenluft in Transportrichtung hinter dem Fluidisationstrockner (10) gewonnene Wärme zur Erwärmung der Trockenluft vor dem Fluidisationstrockner (10) verwendet wird.

5. Verfahren nach einem der Ansprüche 2 bis 4, **dadurch gekennzeichnet, daß** der aus der Trockenkammer (17) abgeführte Schlamm einer Nachtrocknungsvorrichtung (47) zugeführt und darin durch Beaufschlagen mit Trockenluft aus dem geschlossenen Kreislauf bis zu einem Feuchtigkeitsgehalt von etwa 15 bis 1% getrocknet wird.

6. Verfahren nach Anspruch 5, **dadurch gekennzeichnet, daß** die Aufenthaltszeit des Schlamms im Trockenraum (11) und/oder der Nachtrocknungsvorrichtung (47) reguliert wird.

7. Vorrichtung zum Trocknen von Schlamm, insbesondere Abwasserschlamm, im wesentlichen bestehend aus einem Fluidisationstrockner (10) umfassend einen Trockenraum (11) mit einer Eintrittsöffnung (12) und einer Austrittsöffnung (13) für den Schlamm, einer Eintrittsöffnung (14) und einer Austrittsöffnung (15) für Trockenluft, und einen horizontal verlaufenden Siebboden (16), der den Trockenraum (11) in eine Trockenkammer (17) und eine Zuluftkammer (18) teilt, wobei der Fluidisationstrockner (10) mittels eines Leitungssystems (38), in dessen Verlauf in Transportrichtung der Trockenluft hinter dem Fluidisationstrockner (10) Mittel (39) zum Entstauben, Mittel (40) zum Entfeuchten, mindestens ein Ventilator (41, 42) für Zu- und Abluft, mindestens ein JalousettenRegelung (42) sowie ein Warmlufterzeuger (44) angeordnet sind, als geschlossenes System ausgebildet ist, **dadurch gekennzeichnet , daß** im Bereich der Eintrittsöffnung (12) für den Schlamm eine als Schlammaufgeber ausgebildete Dosiereinheit (23) angeordnet ist, die aus einem Gehäuse mit einer Pumpe (24), einem Formsieb (25) als Siebboden und einem Drehmesser (26), das an das Formsieb (25) drückbar ist, besteht, daß in Flußrichtung des Schlamms hinter dem Formsieb (25) ein Mittel zum Zerkleinern des Schlamms angeordnet ist, und daß eine Eintrittsöffnung (31) für Trockenluft in die Dosiereinheit (23) vorgesehen ist.

8. Vorrichtung nach Anspruch 7, **dadurch gekennzeichnet, daß** dem Fluidisationstrockner (10) eine Vorrichtung (47) zum Nachtrocknen des Schlamms nachgeordnet ist.

9. Vorrichtung nach Anspruch 8, **dadurch gekennzeichnet, daß** die Vorrichtung (47) zum Nachtrocknen integraler Bestandteil des Fluidisationstrockners (10) ist.

10. Vorrichtung nach Anspruch 8 oder 9, **dadurch gekennzeichnet, daß** die Vorrichtung (47) zum Nachtrocknen innerhalb der Zuluftkammer (18) angeordnet ist.

11. Vorrichtung nach einem der Ansprüche 7 bis 10, **dadurch gekennzeichnet, daß** innerhalb der Trockenkammer (17) mindestens ein Rührwerk (32, 33) angeordnet ist.

12. Vorrichtung nach einem der Ansprüche 7 bis 11, **dadurch gekennzeichnet, daß** innerhalb der Trockenkammer (17) mindestens eine Trennwand (34, 35) angeordnet ist, die senkrecht zum Siebboden (16) ausgerichtet ist und deren Längenmaß mehr als die Hälfte des Breitenmaßes der Trockenkammer (17) beträgt.

13. Vorrichtung nach einem der Ansprüche 7 bis 12, **dadurch gekennzeichnet, daß** im Bereich der Austrittsöffnung (13) für den Schlamm aus der Trockenkammer (17) eine einstellbare Schwelle (36) vorgesehen ist.

14. Vorrichtung nach einem der Ansprüche 7 bis 13, **dadurch gekennzeichnet, daß** im Verlauf des Leitungssystems (38) eine Wärmepumpenanlage (66) angeordnet ist.

15. Vorrichtung nach Anspruch 14, **dadurch gekennzeichnet, daß** die Wärmepumpenanlage (66) einen Verdampfer (67), einen Kondensator (68), Leitungen (69, 70), eine Pumpe (71) sowie ein Ventil (72) aufweist.

16. Vorrichtung nach Anspruch 15, **dadurch gekennzeichnet, daß** der Verdampfer (67) zwischen dem Mittel (39) zum Entstauben und dem Mittel (40) zum Entfeuchten und der Kondensator (68) zwischen dem Ventilator (43) und dem Wärmelufterzeuger (44) angeordnet ist.

17. Vorrichtung nach einem der Ansprüche 7 bis 16, **dadurch gekennzeichnet, daß** im Bereich des Warmlufterzeugers (44) eine Brennkammer (45) vorgesehen ist.

18. Vorrichtung nach einem der Ansprüche 8 bis 17, **dadurch gekennzeichnet, daß** die Vorrichtung (47) zum Nachtrocknen integraler Bestandteil des geschlossenen Systems ist.

## Claims

1. Method for the drying of sludge, in particular sewage sludge, including the steps of:
a) mechanically draining the sludge to a moisture content of about 90 to 65%,
b) delivering the sludge to a fluidisation drier (10),
c) drying the sludge in a drying chamber (11) of the fluidisation drier (10) with drying air,
d) removing the sludge dried to a moisture content of about 30 to 15% on the one hand and the now moist and dust-containing drying air on the other hand from the drying chamber,
e) wherein the drying air removed from the drying chamber (11) has the dust and moisture extracted and then, after heating in a closed circuit, is recirculated to the drying chamber (11),
**characterised in that**
f) the sludge is shaped before entry into the drying chamber (11),
g) the shaped sludge is at least superficially dried in free fall in a counter-current of drying air,
h) comminuted, and
i) then delivered to the drying chamber.

2. Method according to claim 1, **characterised in that** during drying in a drying compartment (17) of the drying chamber (11) the sludge is held in suspension.

3. Method according to claim 1 or 2, **characterised in that** the speed of the drying air at the level of a sieve tray (16) within the drying chamber (11) is about 2 to 4 times greater than the suspension rate of the sludge.

4. Method according to any of claims 1 to 3, **characterised in that** the heat obtained by removing moisture from the drying air behind the fluidisation drier (10) in the direction of transport is used to heat the drying air before the fluidisation drier (10).

5. Method according to any of claims 2 to 4, **characterised in that** the sludge removed from the drying compartment (17) is delivered to a post-drying apparatus (47) and therein dried to a moisture content of about 15 to 1% by subjecting it to drying air from the closed circuit.

6. Method according to claim 5, **characterised in that** the dwell time of the sludge in the drying chamber (11) and/or the post-drying apparatus (47) is regulated.

7. Apparatus for the drying of sludge, in particular sewage sludge, essentially consisting of a fluidisation drier (10) including a drying chamber (11) with an inlet opening (12) and an outlet opening (13) for the sludge, an inlet opening (14) and an outlet opening (15) for drying air, and a horizontally extending sieve tray (16) which divides the drying chamber (11) into a drying compartment (17) and an air supply chamber (18), wherein the fluidisation drier (10) is designed as a closed system by means of a pipe system (38) in the course of which, behind the fluidisation drier (10) in the direction of transport of the drying air, are arranged means (39) for removing dust, means (40) for removing moisture, at least one fan (41, 42) for incoming and outgoing air, at least one louvre-type regulator (42) and a hot-air generator (44), **characterised in that** in the region of the inlet opening (12) for the sludge is arranged a metering unit (23) designed as a sludge feeder, which consists of a housing with a pump (24), a shaping sieve (25) as the sieve tray and a rotation-measuring device (26) which can be pressed against the shaping sieve (25), **in that** behind the shaping sieve (25) in the direction of flow of sludge is arranged a means for comminuting the sludge, and **in that** an inlet opening (31) for drying air into the metering unit (23) is provided.

8. Apparatus according to claim 7, **characterised in that** behind the fluidisation drier (10) is arranged an apparatus (47) for post-drying of the sludge.

9. Apparatus according to claim 8, **characterised in that** the post-drying apparatus (47) is an integral part of the fluidisation drier (10).

10. Apparatus according to claim 8 or 9, **characterised in that** the post-drying apparatus (47) is arranged within the air supply chamber (18).

11. Apparatus according to any of claims 7 to 10, **characterised in that** within the drying compartment (17) is arranged at least one agitator (32, 33).

12. Apparatus according to any of claims 7 to 11, **characterised in that** within the drying compartment (17) is arranged at least one partition (34, 35) which is oriented perpendicularly to the sieve tray (16) and of which the length is more than half the width of the drying compartment (17).

13. Apparatus according to any of claims 7 to 12, **characterised in that** in the region of the outlet opening (13) for the sludge from the drying compartment (17) is provided an adjustable threshold (36).

14. Apparatus according to any of claims 7 to 13, **characterised in that** in the course of the pipe system (38) is arranged a heat pump system (66).

15. Apparatus according to claim 14, **characterised in that** the heat pump system (66) comprises an evaporator (67), a condenser (68), pipes (69, 70), a pump (71) and a valve (72).

16. Apparatus according to claim 15, **characterised in that** the evaporator (67) is arranged between the means (39) for removing dust and the means (40) for removing moisture, and the condenser (68) is arranged between the fan (43) and the hot-air generator (44).

17. Apparatus according to any of claims 7 to 16, **characterised in that** in the region of the hot-air generator (44) is provided a combustion chamber (45).

18. Apparatus according to any of claims 8 to 17, **characterised in that** the post-drying apparatus (47) is an integral part of the closed system.

## Revendications

1. Procédé de séchage de boue, en particulier de boue d'égout, comportant les étapes consistant à :
a) déshydrater mécaniquement la boue jusqu'à atteindre une teneur en humidité de 90 à 65 % environ,
b) amener la boue dans un sécheur à lit fluidisé (10),
c) sécher la boue dans un espace de séchage (11) du sécheur à lit fluidisé (10) avec de l'air de séchage,
d) évacuer de l'espace de séchage la boue séchée à une teneur en humidité de 30 à 15% environ d'une part et l'air de séchage désormais humide et contenant de la poussière d'autre part,
e) l'air de séchage évacué de l'espace de séchage (11) étant dépoussiéré, déshumidifié puis ramené à l'espace de séchage (11) après réchauffement dans un circuit fermé,
**caractérisé en ce que**
f) la boue est façonnée avant l'entrée dans l'espace de séchage (11),
g) la boue façonnée est séchée au moins en surface en chute libre dans un flux opposé d'air de séchage,
h) est pulvérisée, et
i) est amenée ensuite à l'espace de séchage.

2. Procédé selon la revendication 1, **caractérisé en ce que** la boue est maintenue en suspension pendant le séchage dans une chambre de séchage (17) de l'espace de séchage (11).

3. Procédé selon la revendication 1 ou 2, **caractérisé en ce que** la vitesse de l'air de séchage au niveau d'un fond perforé (16) à l'intérieur de l'espace de séchage (11) est environ deux à quatre fois supérieure à la vitesse de suspension de la boue.

4. Procédé selon l'une des revendications 1 à 3, **caractérisé en ce que** la chaleur dégagée par la déshumidification de l'air de séchage en aval du sécheur à lit fluidisé (10), par référence au sens de transport, est utilisée pour chauffer l'air de séchage en amont du sécheur à lit fluidisé (10).

5. Procédé selon l'une des revendications 2 à 4, **caractérisé en ce que** la boue évacuée de la chambre de séchage (17) est amenée à un dispositif de séchage final (47) dans lequel elle est soumise à de l'air de séchage provenant du circuit fermé pour être séchée jusqu'à une teneur en humidité de 15 à 1 % environ.

6. Procédé selon la revendication 5, **caractérisé en ce que** le temps de séjour de la boue dans l'espace de séchage (11) et/ou le dispositif de séchage final (47) est régulé.

7. Dispositif de séchage de boue, en particulier de boue d'égout, essentiellement constitué d'un sécheur à lit fluidisé (10) comportant un espace de séchage (11) doté d'une ouverture d'entrée (12) et d'une ouverture de sortie (13) destinées à la boue, d'une ouverture d'entrée (14) et d'une ouverture de sortie (15) destinées à l'air de séchage, et d'un fond perforé (16) s'étendant horizontalement et qui divise l'espace de séchage (11) en une chambre de séchage (17) et une chambre d'amenée d'air (18), le sécheur à lit fluidisé (10) étant conformé en système fermé au moyen d'un système de conduites (38) dans lequel un moyen de dépoussiérage (39), un moyen de déshumidification (40), au moins un ventilateur (41, 42) destiné à amener et évacuer de l'air, au moins un dispositif de régulation à lamelles orientables (42) et un générateur d'air chaud (44) sont placés en aval du sécheur à lit fluidisé (10) par référence au sens de transport, **caractérisé en ce qu'**une unité de dosage (23), conformée en chargeur de boue, est placée au niveau de l'ouverture d'entrée (12) destinée à la boue et est constituée d'un boîtier comportant une pompe (24), d'un tamis profilé (25) servant de fond perforé et d'un doseur rotatif (26) qui peut être poussé contre le tamis profilé (25), **en ce qu'**un moyen de pulvérisation de la boue est placée en aval du tamis profilé (25) par référence au sens d'écoulement de la boue, et **en ce qu'**une ouverture d'entrée (31) destinée à l'air de séchage est prévue dans l'unité de dosage (23).

8. Dispositif selon la revendication 7, **caractérisé en ce qu'**un dispositif (47) destiné au séchage final de la boue est monté en aval du sécheur à lit fluidisé (10).

9. Dispositif selon la revendication 8, **caractérisé en ce que** le dispositif de séchage final (47) fait partie intégrante du sécheur à lit fluidisé (10).

10. Dispositif selon la revendication 8 ou 9, **caractérisé en ce que** le dispositif de séchage final (47) est placé à l'intérieur de la chambre d'amenée d'air (18).

11. Dispositif selon l'une des revendications 7 à 10, **caractérisé en ce que** au moins un agitateur (32, 33) est placé à l'intérieur de la chambre de séchage (17).

12. Dispositif selon l'une des revendications 7 à 11, **caractérisé en ce que** au moins une paroi de séparation (34, 35), qui est orientée perpendiculairement au fond perforé (16) et dont la longueur est supérieure à la moitié de la largeur de la chambre de séchage (17), est placée à l'intérieur de la chambre de séchage (17).

13. Dispositif selon l'une des revendications 7 à 12, **caractérisé en ce qu'**il est prévu un seuil réglable (36) au niveau de l'ouverture de sortie (13) destinée à la sortie de la boue de la chambre de séchage (17).

14. Dispositif selon l'une des revendications 7 à 13, **caractérisé en ce qu'**une installation de pompage de chaleur (66) est placée dans le circuit du système de conduites (38).

15. Dispositif selon la revendication 14, **caractérisé en ce que** l'installation de pompage chaleur (66) comporte un évaporateur (67), un condenseur (68), des conduites (69, 70), une pompe (71) et un clapet (72).

16. Dispositif selon la revendication 15, **caractérisé en ce que** l'évaporateur (67) est placé entre le moyen de dépoussiérage (39) et le moyen de déshumidification (40) et le condenseur (68) est placé entre le ventilateur (43) et le générateur d'air chaud (44).

17. Dispositif selon l'une des revendications 7 à 16, **caractérisé en ce qu'**il est prévu une chambre de combustion (45) au niveau du générateur d'air chaud (44).

18. Dispositif selon l'une des revendications 8 à 17, **caractérisé en ce que** le dispositif de séchage final (47) fait partie intégrante du système fermé.
